# EUROPÄISCHE PATENTSCHRIFT

(11) **EP 2 894 383 B1**
(45) Veröffentlichungstag und Bekanntmachung des Hinweises auf die Patenterteilung: **28.09.2016**
(21) Anmeldenummer: 14200602.2
(22) Anmeldetag: 30.12.2014
(51) Int. Cl.: F16L 23/04, F16L 23/08, F16L 23/22, F24F 13/02

(54) **Stoßverbindung zweier Rohrabschnitte mit Spannring**
Butt joint of two tube sections with a clamping ring
Raccord de deux sections de tube à l'aide d'une bague de serrage

(30) Priorität: 10.01.2014 DE 102014200324
(43) Veröffentlichungstag der Anmeldung: 15.07.2015
(73) Patentinhaber: Metu Meinig AG, 78604 Rietheim-Weilheim (DE)
(72) Erfinder: Meinig, Manfred, 78604 Rietheim-Weilheim (DE)
(74) Vertreter: Westphal, Mussgnug & Partner Patentanwälte mbB

(56) Entgegenhaltungen:
- EP-A1- 0 849 518
- DE-A1- 19 728 655
- DE-A1- 19 928 434
- DE-B3-102007 030 485
- DE-B4-102005 021 646
- US-A- 3 429 014
- US-A- 3 791 681

## Beschreibung

Die Erfindung bezieht sich auf eine Stoßverbindung zweier Rohrabschnitte aus dünnwandigem Blech, deren Ende jeweils von der Rohrwand senkrecht abstehende, aneinander anliegende Ringborde aufweisen, welche gegeneinander mittels eines offenen zylindrischen Spannringes gezogen sind, und deren Montage.

Solche Stoßverbindungen sind bei aus runden Rohrleitungen aus dünnwandigem Blech bestehenden Luftleitungen in großer Zahl bekannt, welche außer für allgemeine Lüftungszwecke hauptsächlich für Absaugungen eingesetzt werden.

Vor allem Absaugleitungen müssen vielfältige und teils sehr extreme Anforderungen erfüllen. Insbesondere muss die Verbindung der aus relativ dünnem Blech bestehenden Rohrabschnitten diesen hohen Anforderungen entsprechen.

Solche Hauptanforderungen sind:
a) Nullleckage bei abgesaugter Luft mit toxischen aggressiven, lösungsmittelhaltigen oder krankheitserregenden Inhaltsstoffen, mit Öl- oder Schmiermittelnebel oder Kondensaten sowie mit entsprechenden Flüssigkeiten.
b) Innerhalb der Rohre insbesondere im Bereich der Stoßstellen glatte und ansatzfreie Flächen, um den Luftwiderstand und damit Ablagerungen sowie Geräuschbildungen zu verhindern und die Reinigung zu erleichtern.
c) Einsatz geeigneter Dichtungsmaterialien, die widerstandsfähig gegen alle physikalischen und chemischen Angriffe verschiedenster Stoffe sind, welche in der transportierten Luft enthalten sind.
d) Wirtschaftliche Herstellung, Montage und Demontage der Rohrleitungen

Eine wirtschaftliche Herstellung derartiger Rohrleitungen ist grundsätzlich mit einzelnen zylindrischen Rohrabschnitten aus dünnwandigem Blech mit endseitigen Ringborden möglich, welche mit zylindrischen Spannringen miteinander verbunden werden.

Solche Spannringverbindungen sind für Rohre mit großem und mittlerem Rohrdurchmesser z. B. aus DE 10 2005 021 646 B4 oder DE 197 28 655 A1 bekannt. Hierbei werden relativ stabile schwere Spannringe eingesetzt, die zur Verwendung von Rohrabschnitten mit kleinen Durchmessern, also Durchmessern unter 300 mm, ungeeignet sind.

Der Grund hierfür ist, dass sich kleine Spannringe im Gegensatz zu großen Spannringen nicht federnd zusammenziehen lassen, da bei Spannringen mit kleinen Durchmessern das Verhältnis von Schließweg zur Umfangslänge ungünstig ist. Da die Biegung des relativ steifen Spannringblechprofils durch die Durchmesserreduktion beim Schließen sich auf eine große Umfangslänge verteilen kann, bleibt sie bei großen Durchmessern immer im elastischen Bereich. Bei einem kleineren Umfang von z. B. nur noch einem Meter und weniger ist eine Biegung im elastischen Bereich nicht mehr möglich. Die Folge ist, dass der Spannring beim Schließen oval verformt oder geknickt wird und sich nicht mehr an die Flanschaußenflächen anlegt.

Diese wirtschaftliche Art der Verbindung ist deshalb für Rohre mit kleinem Durchmesser nicht geeignet. Aus diesem Grunde werden in solchen Fällen zweiteilige, halbkreisförmige Spannringe verwendet, deren Hälften gelenkig miteinander verbunden sind und die im geschlossenen Zustand einen dem Rohrumfang entsprechenden Vollkreis bilden. Eine Federung ist in diesem Fall nicht erforderlich. Nachteil ist, dass zwei Spannringschlösser oder ein Spannringschloss und ein Gelenk erforderlich sind, was zu höheren Herstellungskosten und erschwerter Montage führt.

Der vorliegenden Erfindung liegt die Aufgabe zugrunde, eine Stoßverbindung für zylindrische Rohrabschnitte der gattungsgemäßen Art zu schaffen, bei welchen wie bei größeren Rohrdurchmessern ein geschlossener Spannring mit einem Schloss verwendet werden kann und die eingangs genannten Anforderungen erfüllt werden.

Die Erfindung geht hierbei von einer Stoßverbindung nach DE 197 28 655 A1 aus. Des weiteren offenbart die EP 0 849 518 A1 die Merkmale im Oberbegriff des Anspruchs 1.

Gelöst wird diese Aufgabe mit dem in Anspruch 1 gekennzeichneten Spannring, dessen Innendurchmesser vor der Montage, also im Lieferzustand, nicht dem Außendurchmesser der Ringborde entspricht. Vielmehr hat dieser Spannring vor der Montage einen Innendurchmesser, der kleiner ist als beim Aufsetzen auf die Ringborde und der nach der Montage derart reduziert ist, dass die Spannringenden aneinander anliegen.

Dieser Spannring wird bei der Montage zunächst geöffnet, um ihn auf die Ringborde aufzusetzen, und schließlich mittels des Spannringschlosses zusammengezogen, also geschlossen. Diese Maßnahme hat den entscheidenden Vorteil, dass der Schließweg des Spannrings vom Mitteldurchmesser zum Schließdurchmesser nur noch ein Teil des Gesamtschließweges ist, wodurch die Schließbiegung reduziert ist, so dass die Verformung bei Spannringen mit kleinem Durchmesser im elastischen Bereich bleibt.

Zur Ermöglichung oder zumindest wesentlichen Erleichterung der Montage eines derartigen Spannringes sind die mit Anspruch 1 angegebenen Maßnahmen zweckmäßig, durch welche sich der Spannring von bekannten Spannringen ähnlicher Art, z. B. nach EP 0 849 518 A1, unterscheidet, nämlich:
1. Die Schenkel des Spannringes haben einen im Wesentlichen halbkreisförmigen Querschnitt, deren offene Enden die Spannkanten aufweisen.
2. Die Ringborde haben einen im Wesentlichen rechteckförmigen Querschnitt mit stark abgerundeten Stirnflächen und planen, senkrecht zur Rohrwand verlaufenden Flanschflächen sowie parallel zu diesen geneigt oder leicht konisch verlaufenden Außenfläche.
3. Der Spannring besteht aus dünnwandigem, elastisch verformbaren Stahlblech.

Die Maßnahmen gemäß Ziffer 1 und 2 erleichtern das Aufsetzen des im Lieferzustand nicht vollständig geöffneten Spannringes auf die Ringborde, während die Maßnahmen gemäß Ziffer 3 für die erforderliche notwendige Elastizität sorgen.

Nach dem Vorschlag gemäß Anspruch 2 können auch die Spannkanten der Schenkel des Spannringes abgerundet sein, wodurch zusammen mit den oben genannten Maßnahmen gemäß Ziffer 1 und 2 die Montage erleichtert wird.

Die Erfindung weiterbildender Merkmale sind Gegenstand der weiteren Ansprüche 3 bis 7, deren Merkmale ausführlich in der Figurenbeschreibung erläutert sind.

Der Gegenstand der Erfindung ist nachstehend anhand eines bevorzugten Ausführungsbeispieles, das in den Zeichnungen dargestellt ist, im Einzelnen erläutert.

### In den Zeichnungen zeigen:

- Figur 1: Seitenansicht dreier mittels zweier Spannringe verbundener Rohrabschnitte,
- Figur 2: Stirnansicht des mittleren Rohrabschnitts mit Spannring in Figur 1,
- Figur 3: vergrößerte Schnittdarstellung des Ausschnittes A in Figur 1,
- Figur 4a bis Figur 4f: Schnittdarstellung der Ringborde mit Spannring entsprechend Figur 3 zur Veranschaulichung der Spannringmontage,
- Figur 5: Teilfrontansicht aus Figur 2 zur Veranschaulichung der Spannringmontage und
- Figur 6a bis Figur 6c: vergrößerte Teilstirnansichten des Spannringes mit Spannringschloß in drei verschiedenen Positionen

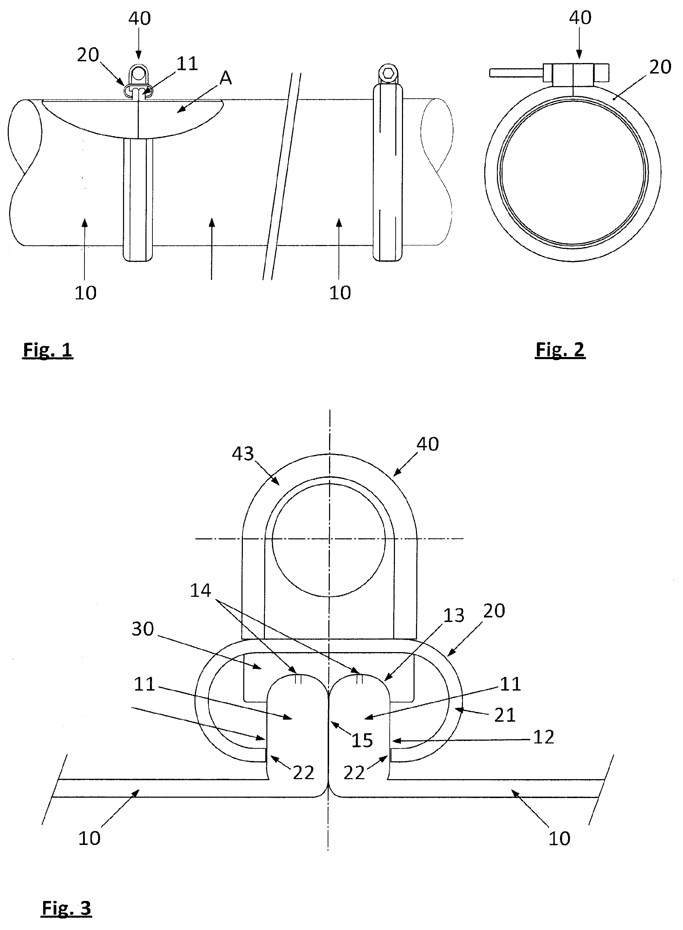

Figur 1 zeigt in Seitenansicht den Teil einer Rohrleitung aus dünnwandigem Blech, deren aneinander anstoßenden Enden Ringborde 11 aufweisen, die mittels einem Spannring 20 verbunden sind.

Wie Figur 2 zeigt, ist der an einem Ende offene Spannring 20 im endmontierten Zustand mittels eines Spannringschlosses 40 zusammengezogen.

Aus der vergrößerten Schnittdarstellung gemäß Figur 3 sind Einzelheiten des auf die Ringborde 11 der Rohrabschnitte 10 aufgesetzten Spannringes 20 zu erkennen.

Die Gestaltung der Ringborde 11 und des auf diese aufgesetzten Spannringes 20 erleichtert die Montage des offenen Spannringes 20, wie dies anhand der nachfolgenden Figuren erklärt ist.

Die an die Enden der Rohrabschnitte 10 angeformten von diesen senkrecht abstehenden Ringborde 11 haben einen im Wesentlichen rechteckförmigen Querschnitt, deren Stirnflächen 13 stark abgerundet sind. Bei dem dargestellten Ausführungsbeispiel entspricht der Radius der abgerundeten Stirnflächen 13 etwa der halben Stärke der Ringborde, wobei in der Mitte der Ringborde eine schmale, plane Dichtfläche 14 vorgesehen ist.

Der Spannring 20 weist beidseitig Schenkel 21 mit einem im Wesentlichen halbkreisförmigen Querschnitt auf, deren offene Enden Spannkanten 22 bilden, die unter Vorspannung an den seitlichen Außenflächen 12 anliegen, die entweder senkrecht zur Wandung der Rohrabschnitte 10 oder leicht geneigt, also konisch, gelegen sind. Die aneinander anliegenden Flanschflächen 15 dagegen verlaufen parallel zueinander und senkrecht zur Wandung der Rohrabschnitte 10. Die starke Rundung der Stirnflächen 13 bewirkt zusammen mit den bogenförmig abgerundeten Schenkeln 21, dass sich der Spannring 20 beim Aufsetzen auf die Ringborde 11 leicht öffnet und der Spannring nach Passieren der Außenflächen 12 in den mittleren Durchmesser zurückschnappt.

Innerhalb des Spannringes 20 ist mittig ein im Querschnitt rechteckförmiger Dichtungsring 30 aus elastisch verformbarem Material vorgesehen. Die starke Rundung der Stirnflächen 13 mit ihren planen Dichtflächen 14 erleichtert das Eindringen der Ringborde 11 in den Dichtungsring 30, wodurch eine gute Abdichtung gewährleistet ist. Der Dichtungsring 30, der breiter als der Abstand zwischen den Spannkanten 22 ist, ist lose innerhalb des Spannringes 20 gelagert. Der Innenbereich des Spannringes 20 bietet genügend Raum für verschiedene Dichtungsformen und -arten. Bei dem bevorzugten Ausführungsbeispiel ist ein endloser Dichtungsring aus einem flachen Dichtungsband vorgesehen, da ein solcher aus den verschiedensten Dichtungsmaterialien wirtschaftlich herstellbar ist. Beim Schließen des Spannringes 20 wird der Dichtungsring 30 in seinem Umfang gestaucht. Wegen der losen Lage innerhalb des Spannringes 20 verteilt sich die Stauchung auf den gesamten Umfang, wodurch eine Faltenbildung beim Schließen verhindert wird.

Voraussetzung für die Montage eines derartigen Spannringes aus Stahlblech ist, dass er bei Verbindung von Rohrabschnitt mit kleinen Rohrdurchmessern, also Rohrdurchmessern etwa unter 300 mm, noch knick- und biegefrei elastisch verformbar ist. Um dies zu erreichen muss der aus dünnwandigem elastisch verformbaren Stahlblech bestehende Spannring möglichst flach sein, um den Biegewiderstand bei Durchmesseränderungen gering zu halten. Seine Stärke sollte darum in radialer Richtung gemessen nicht größer als die Höhe der Ringborde 11 sein.

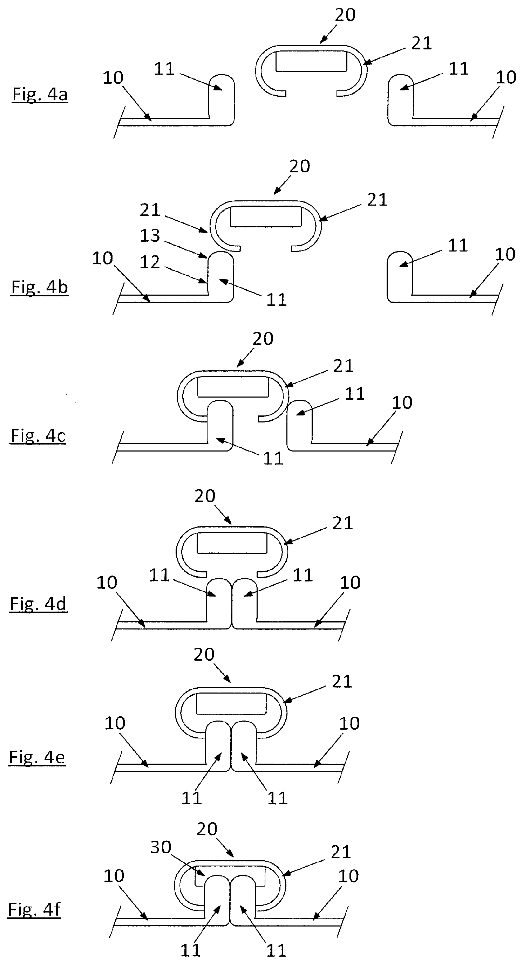

Die Figuren 4a bis 4f veranschaulichen die Vorgänge bei der Montage des Spannringes 20.

Figur 4a zeigt die Situation vor der Verbindung der Rohrabschnitte 10 mittels des Spannringes 20. Dieser wird nicht wie bei Montage von Rohrabschnitten mit großem Durchmesser in ganz geöffnetem Zustand sondern mit einem Mitteldurchmesser geliefert, der zwischen dem Durchmesser des ganz offenen und ganz geschlossenen Spannringes liegt.

Zur Anbringung des Spannringes 20 wird dieser mit seinen im Querschnitt kreisrunden Schenkel 21 zunächst über den Ringbord 11 des ersten Rohrabschnittes geschoben, wobei er sich zunächst öffnet und dann wieder auf seinen ursprünglichen Mitteldurchmesser zurückschnappt, wie mit den Figuren 4b und 4c veranschaulicht ist.

Zum Verbinden des zweiten Rohrabschnittes wird dieser gegen den ersteren geschoben, wobei sich der Spannring 20 wiederum etwas öffnet, um den zweiten Ringbord 11 passieren zu lassen.

Liegen beide Ringborde 11 aneinander, kann der Spannring in seinen Mitteldurchmesser zurückschnappen und hierbei mit seinen Schenkeln die Ringborde 11 seitlich umfassen. Dies veranschaulichen die Figuren 4d und 4e.

In diesem Zustand ist der Spannring 20 noch keiner schließenden Federung unterworfen, vielmehr wurde die Federwirkung nur für die Öffnung genutzt.

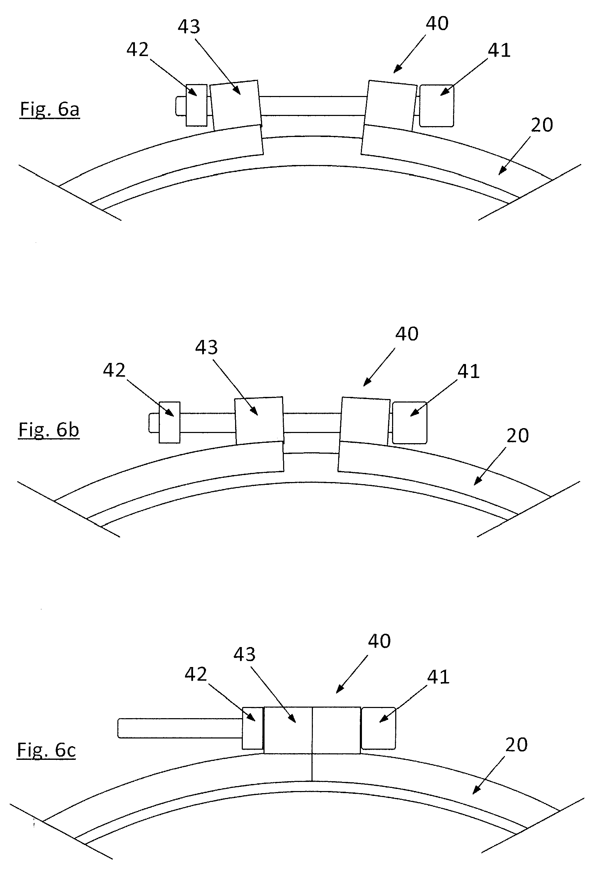

Die beiden Rohrabschnitte 10 sind in dieser Situation ohne Verwendung von Werkzeug noch bewegbar miteinander verbunden. Der Monteur hat die Hände frei, um die Rohrabschnitte auszurichten und schließlich den Spannring mit dem in den Figuren 6a bis 6c gezeigten Spannschloss zu schließen. Der Spannring ist so dimensioniert, dass die Spannringenden aneinander anliegen, wenn die Ringborde 11 ganz in den Dichtungsring 30 eintauchen, wie mit Figur 4f gezeigt ist. Die Verwendung des erfindungsgemäßen einteiligen Spannringes bei Rohren mit vergleichsweise kleinem Durchmesser ist dadurch ermöglicht, dass der Schließweg vom Mitteldurchmesser zum Schließdurchmesser nur ein Teil des gesamten Schließweges ist, so dass die Schließbiegung gering bleibt und immer im elastischen Bereich liegt.

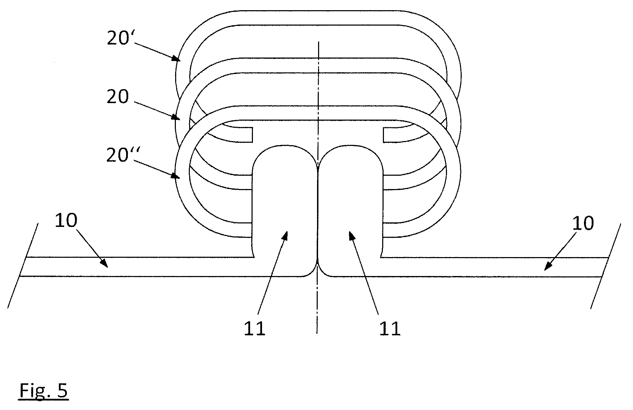

Mit Figur 5 ist in schematischer Weise dargestellt, wie der mit einem mittleren Durchmesser gelieferte Spannring 20 zunächst zum Zwecke der Montage geöffnet wird -Position 20' - und welche Position er nach Betätigen des Spannringschlosses einnimmt - Position 20".

Für das Spannringschloss 40 eignet sich eine zwischen Umfangsrichtung des Spannringes 20 erstreckende Spannschraube 41, vorzugsweise eine Innensechskantschraube, welche an den Enden des Spannringes 20 angebrachte, z. B. angeschweißte, Bügel 43 durchsetzt und auf deren Ende eine Spannmutter 42 aufgeschraubt ist.

Figur 6b zeigt einen Teil des Spannrings 20 mit dem Lieferzustand halb offenen Spannringschloss 40, das zum Zwecke der Montage gemäß Figur 6a geöffnet und zum Zwecke der Endmontage gemäß Figur 6c geschlossen werden muss.

### Bezugszeichenliste

- 10: Rohrabschnitte
- 11: Ringborde
- 12: Außenfläche der Ringborde
- 13: Stirnfläche
- 14: plane Dichtfläche
- 15: Flanschfläche
- 20: Spannring
- 21: Schenkel
- 22: Spannkanten
- 30: Dichtungsring
- 40: Spannringschloss
- 41: Spannschraube
- 42: Spannmutter
- 43: Bügel

## Patentansprüche

1. Stoßverbindung bestehend aus zwei Rohrabschnitten (10) aus dünnwandigem Blech, einem Spannring (20) und einem Dichtungsring (30), wobei die Enden der Rohrabschnitte (10) jeweils von der Rohrwand senkrecht abstehende, aneinander anliegende Ringborde (11) aufweisen, welche gegeneinander mittels des offenen, die Ringborde (11) umfassenden zylindrischen Spannringes (20) gezogen sind, der im Wesentlichen ein U-Profil besitzt, dessen Schenkel (21) mit Spannkanten (22) beidseitig an den Außenflächen (12) der Ringborde (11) unter Spannung anliegen und in dessen Innern der auf den Stirnflächen der Ringborde (11) aufliegende Dichtungsring (30) vorgesehen ist, und der Spannring (20) ein die offenen Spannringenden überbrückendes Spannschloss (40) aufweist,
wobei der Spannring (20) vor der Montage auf den Ringborden (11) einen Innendurchmesser hat, der kleiner als der Außendurchmesser der Ringborde (11) ist, beim Aufsetzen auf die Ringborde (11) geweitet und nach der Montage derart reduziert ist, dass die Spannringenden aneinander anliegen,
und wobei die in radialer Richtung gemessene Stärke des Spannringes (20) nicht größer als die Höhe der Ringborde (11) ist, **dadurch gekennzeichnet,**
**dass** die Schenkel (21) des Spannringes (20) einen im Wesentlichen halbkreisförmigen Querschnitt haben, deren offene Enden die Spannkanten (22) aufweisen, dass die Ringborde (11) einen im Wesentlichen rechteckförmigen Querschnitt mit stark abgerundeten Stirnflächen (13) und planen, senkrecht zur Rohrwand verlaufenden Außenflächen (12) besitzen, und
**dass** der Spannring (20) aus dünnwandigem, elastisch verformbaren Stahlblech besteht.

2. Stoßverbindung nach Anspruch 1,
**dadurch gekennzeichnet, dass** die Spannkanten der Schenkel des Spannringes abgerundet sind.

3. Stoßverbindung nach Anspruch 1 oder 2,
**dadurch gekennzeichnet, dass** der Radius der abgerundeten Stirnflächen (13) der Ringborde (11) der halben Stärke der Ringborde (11) in axialer Richtung entspricht.

4. Stoßverbindung nach Anspruch 1 oder 2,
**dadurch gekennzeichnet, dass** zwischen den abgerundeten Stirnflächen (13) der Ringborde (11) eine schmale, in Umfangsrichtung verlaufende plane Dichtfläche (14) vorgesehen ist.

5. Stoßverbindung nach Anspruch 1 bis 4,
**dadurch gekennzeichnet, dass** der Dichtungsring (30) aus einem endlosen, flachen Band mit rechteckförmigem Querschnitt besteht, dessen Breite größer als der Abstand der Spannkanten (22) des Spannringes (20) ist.

6. Stoßverbindung nach Anspruch 5,
**dadurch gekennzeichnet, dass** der Dichtungsring (30) lose innerhalb des Spannringes (20) gelagert ist.

7. Stoßverbindung nach Anspruch 1 bis 6,
**dadurch gekennzeichnet, dass** das Spannringschloss (40) aus einer sich in Umfangsrichtung des Spannringes (20) erstreckenden Spannschraube (41) und einer Spannmutter (42) besteht, welche in nahe der Spannringenden vorgesehene, mit dem Spannring (20) verbundene Bügel (43) eingesetzt sind.

8. Verfahren zur Montage einer Stoßverbindung nach einem der vorangehenden Ansprüche,
**dadurch gekennzeichnet, dass** der Spannring (20) vor der Montage auf den Ringborden (11) einen Innendurchmesser hat, der kleiner als der Außendurchmesser der Ringborde (11) ist, beim Aufsetzen auf die Ringborde (11) geweitet und nach der Montage derart reduziert wird, dass die Spannringenden aneinander anliegen.

## Claims

1. Butt joint consisting of two pipe sections (10) made from thin-walled sheet metal, a clamping ring (20) and a sealing ring (30), wherein the ends of the pipe sections (10) have annular edges (11) protruding perpendicularly from the pipe wall respectively and abutting onto one another, which are drawn against one another by means of the open, cylindrical clamping ring (20) comprising the annular edges (11), said clamping ring substantially having a U-profile, the arms (21) of which abut onto the outer surfaces (12) of the annular edges (11) on both sides with clamping edges (22) by tensioning and the sealing ring (30) supported on the front surfaces of the annular edges (11) is provided in the interior thereof, and the clamping ring (20) has a turnbuckle (40) bridging the open clamping ring ends, wherein, before assembly on the annular edges (11), the clamping ring (20) has an inner diameter which is smaller than the outer diameter of the annular edges (11), is widened during setting onto the annular edges (11) and is reduced after assembly in such a way that the clamping ring ends abut onto one another, and wherein the thickness of the clamping ring (20) measured in the radial direction is not greater than the height of the annular edges (11),
**characterised in that**
the arms (21) of the clamping ring (20) have a
substantially semi-circular cross-section, the open ends of which have the clamping edges (22); the annular edges (11) have a substantially rectangular cross-section with heavily rounded front surfaces (13) and flat outer surfaces (12) running perpendicularly to the pipe wall; and the clamping ring (20) consists of thin-walled, elastically deformable sheet steel.

2. Butt joint according to claim 1,
**characterised in that** the clamping edges of the arms of the clamping ring are rounded.

3. Butt joint according to claim 1 or 2,
**characterised in that** the radius of the rounded front surfaces (13) of the annular edges (11) corresponds to half the thickness of the annular edges (11) in the axial direction.

4. Butt joint according to claim 1 or 2,
**characterised in that** a narrow, flat sealing surface (14) running in the peripheral direction is provided between the rounded front surfaces (13) of the annular edges (11).

5. Butt joint according to claim 1 to 4,
**characterised in that** the sealing ring (30) consists of a continuous, flat band having a rectangular cross-section, the width of which is greater than the distance between the clamping edges (22) of the clamping ring (20).

6. Butt joint according to claim 5,
**characterised in that** the sealing ring (30) is mounted loosely within the clamping ring (20).

7. Butt joint according to claim 1 to 6,
**characterised in that** the clamping ring lock (40) consists of a clamp screw (41) extending in the peripheral direction of the clamping ring (20) and a clamping nut (42), which are inserted into brackets (43) provided close to the clamping ring ends and connected to the clamping ring (20).

8. Method for assembly of a butt joint according to one of the preceding claims,
**characterised in that** the clamping ring (20) has an inner diameter, before the assembly on the annular edges (11), which is smaller than the outer diameter of the annular edges (11), is widened during setting onto the annular edges (11) and is reduced after assembly in such a way that the clamping ring ends abut onto one another.

## Revendications

1. Raccord formé de deux segments de tube (10) en une tôle à paroi mince, d'un collier (20) et d'un joint d'étanchéité (30),
- les extrémités des segments de tube (10) ayant chacune un collet annulaire (11) perpendiculaire à la paroi du tube, ces collets étant appliqués l'un contre l'autre en étant tirés l'un contre l'autre par le collier (20), cylindrique, ouvert entourant les deux collets annulaires (11), ce collier ayant pratiquement une section en forme de U dont les branches (21) s'appliquent par des arêtes de serrage (22) des deux côtés contre la surface extérieure (12) des collets (11) sous tension et à l'intérieur duquel, le joint d'étanchéité (30) est appliqué contre la surface frontale des collets annulaires (11), le collier (20) ayant une serrure de tension (40) chevauchant les extrémités ouvertes du collier,
- avant son montage sur les collets (11), le collier (20) a un diamètre intérieur inférieur au diamètre extérieur des collets (11) et lors de sa mise en place sur les collets (11), il s'élargit et après le montage, il se réduit d'une façon telle que les extrémités du collier, s'appliquent l'une contre l'autre, et
l'épaisseur du collier (20), mesurée dans la direction radiale n'est pa supérieure à la hauteur des collets (11),
raccord **caractérisé en ce que**
les branches (21) du collier (20) ont une section pratiquement en demi-cercle dont les extrémités ouvertes comportent les arêtes de serrage (22),
- les collets (11) ayant une section essentiellement rectangulaire avec des arrêtes frontales (13) fortement arrondies et des surfaces extérieures (12), planes, perpendiculaires à la paroi extérieure, et
- le collier (20) est en une tôle d'acier, mince, déformable élastiquement.

2. Raccord selon la revendication 1,
**caractérisé en ce que**
les arêtes de serrage des branches du collier sont arrondies.

3. Raccord selon la revendication 1 ou 2,
**caractérisé en ce que**
le rayon des arrêtes frontales arrondies (13) des collets (11) correspond à la demi-épaisseur des collets (11) dans la direction axiale.

4. Raccord selon la revendication 1 ou 2,
**caractérisé par**
une surface d'étanchéité (14), plane, dans la direction périphérique, étroite, entre les surfaces frontales arrondies (13) des collets (11).

5. Raccord selon les revendications 1 à 4,
**caractérisé en ce que**
le joint d'étanchéité (30) est un ruban plat, sans fin, de section rectangulaire dont la largeur est supérieure à la distance des arêtes de serrage (22) du collier (20).

6. Raccord selon la revendication 5,
**caractérisé en ce que**
le joint d'étanchéité (30) est logé libre dans le collier (20).

7. Raccord selon les revendications 1 à 6,
**caractérisé en ce que**
la serrure de collier (40) est constituée par une vis de serrage (41) s'étendant dans la direction périphérique du collier (20) et d'un écrou de serrage (42) prévu à proximité des extrémités du collier, en étant installé dans un étrier (43) relié au collier (20).

8. Procédé de montage d'un raccord selon l'une des revendications précédentes,
**caractérisé en ce qu'**
avant son montage sur les collets (11), le collier (20) a un diamètre intérieur, inférieur au diamètre extérieur des collets (11), lors de la mise en place sur les collets (11) on l'élargit et après le montage on le réduit de façon que les extrémités du collier s'appuient l'une contre l'autre.
